Europäisches Patentamt

European Patent Office

Office européen des brevets

(11) Veröffentlichungsnummer: **0 147 525**
**B1**

(12) **EUROPÄISCHE PATENTSCHRIFT**

(45) Veröffentlichungstag der Patentschrift:
**07.01.88**

(21) Anmeldenummer: **84109857.7**

(22) Anmeldetag: **16.08.84**

(51) Int. Cl.⁴: **B 23 K 26/02**

(54) **Laser-Bearbeitungsmaschine.**

(30) Priorität: **29.10.83 DE 3339318**

(43) Veröffentlichungstag der Anmeldung:
**10.07.85 Patentblatt 85/28**

(45) Bekanntmachung des Hinweises auf die Patenterteilung:
**07.01.88 Patentblatt 88/1**

(84) Benannte Vertragsstaaten:
**CH FR GB IT LI**

(56) Entgegenhaltungen:
**DE - A - 2 947 071**
**DE - A - 3 134 556**
**DE - A - 3 228 698**
**US - A - 4 327 277**

(73) Patentinhaber: **Trumpf GmbH & Co,**
**Postfach 1320 Johann-Maus-Strasse 2,**
**D-7257 Ditzingen (DE)**

(72) Erfinder: **Klingel, Hans, Dipl.-Ing. (FH), Teckstrasse 91,**
**D-7141 Möglingen (DE)**

(74) Vertreter: **Schmid, Berthold, Dipl.-Ing. et al,**
**Falbenhennenstrasse 17, D-7000 Stuttgart 1 (DE)**

ACTORUM AG

**Beschreibung**

Die Erfindung bezieht sich auf eine Maschine zum Bearbeiten eines Werkstücks mittels eines durch eine gegenüber einem Werkstück bewegbare Düse austretenden Laserstrahls, der an mindestens einem Umlenkspiegel umgelenkt wird, wobei der bzw. einer der Umlenkspiegel automatisch einstellbar ist, indem wenigstens eine Prüfvorrichtung die Abweichung der Ist-Lage von der Soll-Lage des Laserstrahls ermittelt und ein der Abweichung entsprechendes Steuersignal über einen Rechner zumindest an eine Verstelleinrichtung für den einstellbaren Spiegel sendet. Eine derartige Maschine ist durch die DE-AI-2947071 bekannt geworden. Sie besitzt einen vom genannten Rechner um zwei zueinander senkrechte Achsen kippbaren Spiegel sowie zwei weitere Umlenkspiegel. Jeder der beiden letzteren wird bei jeweils einer Bewegung der Düse in einer der beiden Koordinatenrichtungen mitbewegt, während der einstellbare Spiegel stationär angebracht ist. Der einstellbare Spiegel befindet sich nahe am Lasergerät, so dass der von ihm abgehende Strahlteil noch über die beiden nicht einstellbaren Spiegel gehen muss. Bei einer Verstellung des einstellbaren Spiegels ändert sich sowohl der ankommende als auch der abgehende Strahlteil an jedem der beiden nachfolgenden, nicht verstellbaren Spiegel. Andererseits werden aber diese beiden nicht verstellbaren Spiegel beim Verfahren der Düse in X- und Y-Richtung stets mitbewegt. Wenn sie sich beispielsweise durch Erschütterungen verstellen, so können sie nicht automatisch korrigiert werden. Ausserdem kommt es aufgrund der Toleranzen der Längs- und Querführung der Düse in nahezu unvermeidlicher Weise zu «Fehlstellungen» der beiden nicht verstellbaren Umlenkspiegel, weil die Überprüfung des Strahls im Spiegel erfolgt und nicht in der Nähe der Düse.

Durch die US-A-4327277 ist eine Laser-Lötmaschine bekannt geworden, die einen gegenüber dem in einer Ebene verschiebbaren werkstückfesten Laser-Lötkopf mit einem feststehenden Strahlerzeuger aufweist. Die Spiegel dieser Maschine sind verschiebbar, um dadurch unterschiedliche Abstände des Werkstücks ausgleichen zu können. Eine Vorrichtung zur selbsttätigen Korrektur der Ist-Lage gegenüber der Soll-Lage mittels eines schwenkbaren Spiegels ist nicht vorgesehen.

Der Laserstrahl dieser Maschine kann über ein Prisma in zwei Bearbeitungsstrahler zerlegt werden, jedoch dient diese Zerlegung nicht zur Schaffung eines schwächeren, eine schonendere Überwachung ermöglichenden Laserstrahls, sondern zur Bearbeitung des Werkstücks an zwei verschiedenen Seiten.

Durch die DE-AI-3228698 ist eine Maschine zum Lochen von Werkstücken, beispielsweise Zylindern, mit Hilfe eines Laserstrahls bekannt geworden. Die Ist-Lage des Strahls wird dabei überprüft und von einer Kamera erfasst sowie auf einem Bildschirm dargestellt. Eine Abweichung von der Soll-Lage wird von Hand durch Verschieben des Werkstücks korrigiert. Eine automatische Korrektur des austretenden Strahls, beispielsweise über einen steuerbaren Umlenkspiegel, ist nicht vorgesehen.

Die Aufgabe der Erfindung besteht infolgedessen darin, eine Maschine der eingangs beschriebenen Art so weiterzubilden, dass die selbsttätige Korrektur zur Rückführung des austretenden Strahls auf die Soll-Lage und damit die Ausrichtung gegenüber der Düse bzw. der Fokussiereinrichtung mit höherer Genauigkeit möglich ist.

Zur Lösung dieser Aufgabe wird erfindungsgemäss vorgeschlagen, dass die Maschine nach dem Oberbegriff des Anspruchs 1 gemäss dem kennzeichnenden Teil dieses Anspruchs ausgebildet ist.

Bei dieser Maschine erfolgen sowohl die Erfassung des Laserstrahls als auch die gegebenenfalls notwendige Korrektur seiner Lage im Endbereich der gesamten Strahlstrecke. Weil zumindest der in Laufrichtung des Strahls letzte Spiegel regulierbar ist, kann ein Nachstellen auch dann erfolgen, wenn er sich beispielsweise während der Bearbeitung des Werkstücks etwas verstellt hat oder wenn die Führung für die Düsenverschiebung Ungenauigkeiten aufweist. Da seine bzw. ihre jeweilige Stellung indirekt über die Prüfeinrichtungen ständig kontrollierbar ist, kann man auch zu jeder Zeit ihre Lagekorrektur durchführen. Man erreicht hierdurch eine besonders hohe Präzision der Lage des letzten Strahlteils gegenüber der Düse, was letztlich dem Arbeitsergebnis zugute kommt.

An sich reichen zwei Umlenkspiegel im gesamten System aus. In diesem Falle sind bei der erfindungsgemässen Maschine sämtliche Spiegel jederzeit nachstellbar im Gegensatz zur vorbekannten Maschine, wo drei Spiegel erforderlich sind, von denen nur einer überwacht und nachreguliert werden kann.

Das Laser-Schneidverfahren eignet sich grundsätzlich zur Herstellung sowohl von Einzelstücken als auch von mittleren Serien bei komplizierter Formgebung. Mit Hilfe eines entsprechenden Programms und einer Programmsteuerung lässt sich ein Werkstück oder ein Durchbruch in kürzester Zeit erstellen, wobei sich innerhalb eines Werkstücks durchaus noch Durchbrüche beliebiger Kontur befinden können. Durch Änderung des Programms kann man auf einfache Weise eine festgelegte Form in jeder beliebigen Weise abändern. Wenn man in der hier vorgesehenen Weise den Laser gegenüber dem Werkstück, insbesondere einer Blechtafel, bewegt, so können problemlos auch vergleichsweise grosse und schwere Blechtafeln bearbeitet werden, ohne dass eine grosse Masse bewegt und abgebremst werden muss.

Es bleibt noch nachzutragen, dass der Strahl bzw. der unmittelbar auf dem Werkstück auftreffende Strahlteil bei einem X-Y-Vorschub der Düse in seiner Soll-Lage durch den Koordinatennullpunkt geht.

Eine Weiterbildung der Erfindung sieht bei einer Maschine mit wenigstens zwei Umlenkspiegeln und mindestens zwei Prüfvorrichtungen für den Strahlverlauf vor, dass die Prüfvorrichtung für den in Laufrichtung des Laserstrahls vorletzten Spiegel dem letzten Umlenkspiegel zugeordnet ist, insbesondere beide Prüfvorrichtungen dem letzten Strahlteil zugeordnet sind.

Eine andere Ausbildung der Erfindung sieht vor, dass bei einer Maschine mit zweifacher Spiegeleinstellung die einstellbaren Spiegel in zwei zueinander senkrechten Richtungen drehbar oder in einer Richtung drehbar sowie in Richtung des ankommenden Strahlteils verschiebbar sind, wobei im letzteren Falle die Drehachse senkrecht zur Ebene des umgelenkten Strahls verläuft.

Eine weitere Variante der Erfindung besteht darin, dass der Laserkopf in Längsrichtung seiner Drehachse (X-Richtung) verschiebbar an einer Haltevorrichtung gelagert ist und die Haltevorrichtung senkrecht zur Drehachse, d.h. in Y-Richtung verschiebbar an der Maschine gelagert ist, wobei sich der vorletzte Umlenkspiegel in der Haltevorrichtung befindet.

Eine besonders bevorzugte Ausführungsform der Erfindung ist dadurch gekennzeichnet, dass der Laserkopf mit der Düse, der Fokussiereinrichtung, mindestens der Prüfvorrichtung für den letzten Umlenkspiegel sowie letzterem um eine Achse drehbar ist, die durch den zwischen den beiden verstellbaren Umlenkspiegeln verlaufenden vorletzten Strahlteil bestimmt ist. Sie ermöglicht die Bearbeitung von dreidimensional geformten Blechen, wie Wellblech oder Karosserieteile. Die dritte Dimension liesse sich auch durch Heben und Senken der Düse erreichen, jedoch ist ein schwenkbarer Laserkopf aus verschiedenen Gründen vorteilhafter. Mit der Verschwenkung des Laserkopfs ist auch noch eine Bewegung des Laserstrahls innerhalb der Schwenkebene verbunden. Diese lässt sich aber über eine Programmsteuerung und entsprechende Gegenverschiebung in der betreffenden Richtung leicht kompensieren.

Der Laserstrahl darf selbstverständlich die Prüfvorrichtung in keiner Weise negativ beeinträchtigen und letztere müssen insbesondere vor Beschädigungen durch den Laserstrahl geschützt werden. Dies gilt insbesondere dann, wenn die Prüfvorrichtung über einen längeren Zeitraum bzw. ständig eingeschaltet bleibt. Andererseits gibt es aber bereits Laser von solcher Leistung, dass man je nach Ausbildung der Prüfvorrichtung nicht sicher sein kann, ob sie einer ständigen Belastung durch den Laserstrahl auf Dauer gewachsen sind. Schliesslich ist es auch denkbar, dass eine Prüfvorrichtung zwar für einen schwachen, nicht jedoch für einen starken Laserstrahl geeignet ist. Andererseits sucht man aber bei derartigen Maschinen die Leistung immer wieder zu steigern, so dass man aus dieser Sicht starken Laserstrahlen den Vorzug gibt.

Um nun auch in dieser Richtung eine Verbesserung zu schaffen, wird in weiterer Ausbildung der Erfindung vorgeschlagen, dass der Laserstrahl mittels einer Trennvorrichtung in einen Hauptstrahl und einen dazu parallelen Hilfsstrahl unterteilbar ist, wobei die Prüfvorrichtung bzw. -vorrichtungen lediglich dem Hilfsstrahl zugeordnet ist bzw. sind. Letzteren kann man so wählen, dass einerseits für die Bearbeitung keine nennenswerte Energie verloren geht und andererseits an der oder den Prüfvorrichtungen nur noch eine ganz minimale Strahlenergie ankommt. Aufgrund der Parallelität des Haupt- und des Hilfsstrahls ist es nun ohne Schwierigkeiten möglich, die Lage des Hilfsstrahls zu ermitteln und im Falle einer Abweichung von der Soll-Lage die Verstellung so vorzunehmen, dass der Hilfsstrahl seine Soll-Lage einnimmt bzw. wieder einnimmt. Aufgrund der Parallelität erreicht man dann gleichzeitig auch eine korrekte Lage des Hauptstrahls. Selbstverständlich sind in diesem Falle die Düse und die Fokussiereinrichtung ausschliesslich dem Hauptstrahl zugeordnet. Die vorstehend beschriebenen Ausgestaltungen der Maschine gelten bei einer Maschine mit einem Haupt- und Hilfsstrahl sinngemäss. Wenn beispielsweise gemäss Anspruch 3, «insbesondere zwischen einer Strahlbündelungsvorrichtung und einem vorgeschalteten Umlenkspiegel zwei im Abstand voneinander angeordnete Prüfvorrichtungen angebracht sind», so befinden sich selbstverständlich diese beiden Prüfvorrichtungen bei einer Maschine mit Haupt- und Hilfsstrahl im Strahlengang des letzteren und dabei ist dann eine Bezugnahme auf die Strahlbündelungsvorrichtung nicht mehr möglich. Statt dessen kann beispielsweise auf das Werkstück Bezug genommen werden, d.h. in diesem Falle würden sich dann die Prüfvorrichtungen zwischen dem Werkstück und dem vorgeschalteten Umlenkspiegel befinden. Andere Ausgestaltungen der Maschine gelten sinngemäss.

Eine andere Variante der Erfindung sieht vor, dass das Lasergerät als Doppelgerät ausgebildet ist, dessen beide Laserstrahlen parallel verlaufen und einen Hauptstrahl sowie einen schwächeren Hilfsstrahl bilden, wobei die Prüfvorrichtung bzw. -vorrichtungen lediglich dem Hilfsstrahl zugeordnet ist bzw. sind. Bei dieser Maschine spart man sich die Einrichtung zum Abzweigen eines Hilfsstrahls vom Hauptstrahl ein, jedoch muss statt dessen das Lasergerät als Doppelgerät ausgebildet werden. Die zum Gerät mit Trennvorrichtung gemachten Ausführungen gelten beim Doppelgerät sinngemäss. Letzteres gibt im übrigen eine Möglichkeit zur vorteilhaften Weiterbildung, welche darin besteht, dass der Hauptstrahl ein Strahl hoher Intensität, insbesondere im Infrarotbereich, und der Hilfsstrahl ein Strahl geringer Intensität, vorzugsweise im sichtbaren Bereich, ist. Damit hat man einerseits die Vorteile des sichtbaren Strahls, nämlich eine leichtere Beobachtung des Strahlverlaufs und andererseits diejenigen des energiereichen Strahls im Infrarotbereich, der die Bearbeitung von Blechen ermöglicht.

In der Zeichnung ist die Erfindung anhand von Ausführungsbeispielen, vorzugsweise schematisiert, dargestellt.

Es zeigen:

Fig. 1 die Maschine im Bereich des Laserkopfs mit schematischer, der der Übersichtlichkeit wegen lediglich eindimensionaler Verstellung für einen Laserstrahl;

Fig. 2 und 3 zwei Ausführungsbeispiele mit zwei Prüfvorrichtungen – schematisch;

Fig. 4 eine weitere, den Fig. 2 und 3 entsprechende Schemadarstellung mit Haupt- und Hilfsstrahl;

Fig. 5 schematisch die Bearbeitung mit «verfahrbarem» Laserstrahl;

Fig. 6 und 7 zwei theoretische Möglichkeiten für die Verstellung zweier Umlenkspiegel durch zwei Prüfvorrichtungen.

Eine Laser-Bearbeitungsmaschine, vorzugsweise herkömmlicher Form, besitzt einen auslegerartigen Maschinenteil 1 und ein ortsfest angebautes, vorzugsweise jedoch gegenüber dem Maschinenteil 1 ausrichtbares, Lasergerät 2. Aus diesem tritt ein Laserstrahl 3 aus, der durch wenigstens einen Umlenkspiegel 4 abgelenkt wird. Der ankommende Strahlteil ist mit 5 und der reflektierte mit 6 bezeichnet. Letzterer gelangt zu einer Fokussiereinrichtung 7 bekannter Bauart. Sie bündelt den Lichtstrahl und der gebündelte Strahl tritt über eine Düse 8 des Laserkopfs 9 aus. Anschliessend erreicht er das Werkstück 10, beispielsweise eine Blechtafel. In letztere brennt er ein Loch. Wenn man den Laserstrahl und die Blechtafel im Sinne des Doppelpfeils 11 relativ zueinander bewegt, so entsteht im Werkstück 10 ein Schlitz. Auf diese Weise kann man aus der Blechtafel ein Bauteil vorbestimmter Grösse und Form ausbrennen. Denkbar ist auch der umgekehrte Fall, dass die Blechtafel 10 das endgültige Werkstück bildet und mit Hilfe des Laserstrahls ein oder mehrere Durchbrüche ausgebrannt werden. Die herausgetrennten Stücke bilden hierbei Abfallstücke. Üblicherweise erreichte man die Relativbewegung zwischen Werkstück 10 und Laserstrahl durch eine Relativbewegung des Werkstücks 10 innerhalb der Werkstückebene gegenüber dem ortsfesten Laserstrahl. Hierbei wird das Blech mit Hilfe eines gegebenenfalls gleichzeitig betätigbaren Längs- und Quervorschub der Maschine entsprechend der auszubrennenden Kontur bewegt.

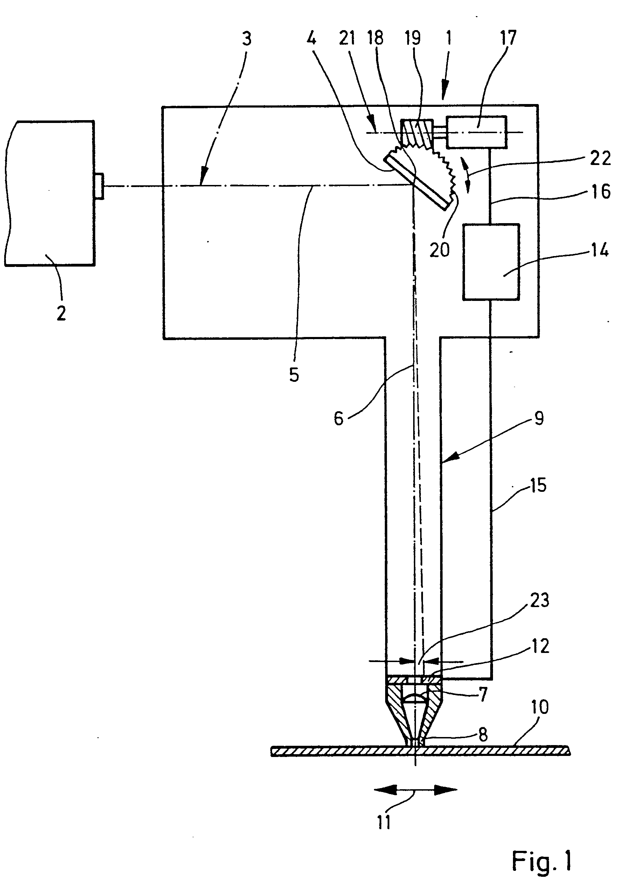

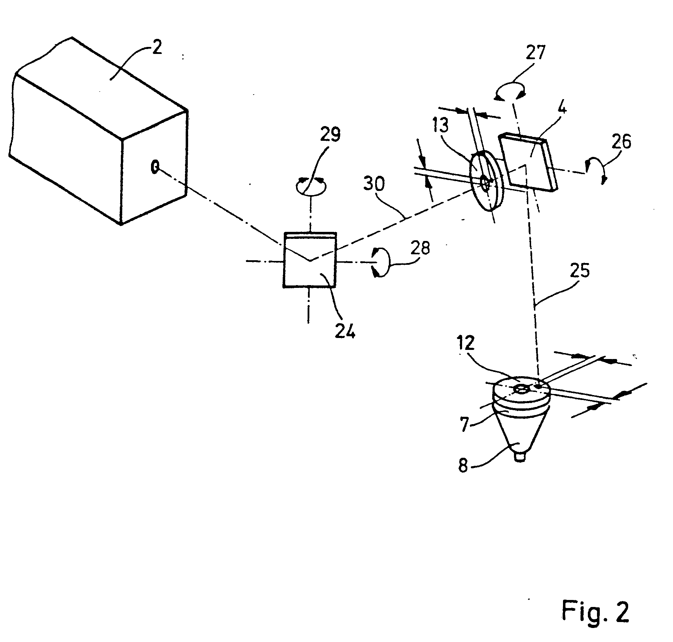

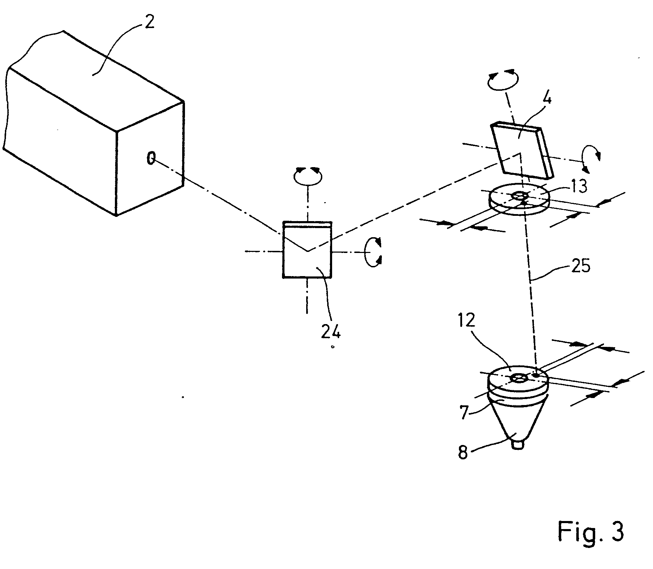

Den Laserstrahl kann man, wie gesagt, gegenüber dem Werkstück beispielsweise dadurch ausrichten, dass man das Lasergerät, beispielsweise um zwei Achsen, kippbar am Maschinengestell befestigt. Ausserdem oder statt dessen kann man bei gewissen Lasergeräten auch die eingebauten Umlenkspiegel verstellen. Eine weitere Möglichkeit bzw. zusätzliche Möglichkeit eröffnet die Verstellung des oder der im Strahlengang zwischen dem Lasergerät 2 und der Düse 8 liegenden Spiegel. Bei nicht sichtbarem Laserstrahl ist die Einstellung zweifellos schwieriger als bei sichtbarem. Ausserdem ist es bislang weder üblich noch auf einfache Weise möglich gewesen, den Laserstrahl dauernd oder zu jedem gewünschten Zeitpunkt während des Arbeitens mit der Maschine auf seine korrekte Lage hin zu überprüfen. Erfindungsgemäss wird nun diesbezüglich eine Verbesserung dadurch geschaffen, dass man in den Strahlengang des Laserstrahls wenigstens eine Prüfvorrichtung 12 (Fig. 1), vorzugsweise aber mindestens zwei solche Prüfvorrichtungen (Fig. 2 und 3) einsetzt. Sie können die Abweichung des Laserstrahls bzw. des von ihnen erfassbaren Laserstrahlteils von einer Soll-Lage feststellen und dieses Messergebnis in ein verwertbares Signal umsetzen. Dieses kann entweder auf ein Anzeigegerät gegeben werden oder in bevorzugter Weise an einen Rechner 14. Eine Verbindung zwischen letzterem und der bzw. jeder Prüfvorrichtung ist in Fig. 1 mit 15 bezeichnet. Über eine weitere Leitung 16 verbindet man den Rechner 14 mit einem bzw. zwei Stellmotoren für den zugehörigen Umlenkspiegel. In Fig. 1 ist der Umlenkspiegel 4 um eine zur Bildebene senkrechte Achse 18 drehbar. Sowohl diese Achse als auch der gezeigte aus einer Schnecke 19 und einem Schneckenrad 20 bestehende Antrieb 21 für den Spiegel 4, sind nur symbolisch zu verstehen und sie können in anderer geeigneter Weise ausgebildet sein. Ausserdem ist in Fig. 1 der Übersichtlichkeit wegen nur ein Stellmotor 17 und nur ein Antrieb 21 gezeichnet. Zusätzlich ist der Spiegel auch noch um eine in der Blattebene liegende, senkrecht zur Achse 18 verlaufende zweite Achse kippbar und deshalb ist der Rechner 14 in nicht gezeigter Weise über die Leitung 16 auch noch mit einem zweiten Stellmotor verbunden, der einen zweiten Antrieb für den Spiegel 4 antreiben kann. Dadurch kann der Strahl in Längs- und Querrichtung ausgerichtet werden in Abhängigkeit einer X- und Y-Abweichung der Ist-Lage des Strahls von einer Soll-Lage. Die Verschwenkung des Spiegels 4 um die Achse 18 ist durch den Doppelpfeil 22 symbolisiert. In allen Figuren ist die Soll-Lage des Laserstrahls mit strichpunktierten Linien und die Ist-Lage mit gestrichelten Linien dargestellt. Der Deutlichkeit wegen sind die Abweichungen, die beispielsweise im Minutenbereich liegen, übertrieben stark dargestellt. Des weiteren ist die Prüfvorrichtung 12 jeweils symbolisch als Lochscheibe gezeichnet, jedoch bedeutet dies keinesfalls, dass sie eine derartige Gestalt und Ausbildung haben muss. Wie sie im einzelnen beschaffen ist, hängt insbesondere von der Beschaffenheit und Intensität des Strahls ab. Zweckmässigerweise ist eine Mitte oder zumindest ein mittlerer Bereich der Soll-Lage des Strahls zugeordnet. In dieser Mitte liegt auch ein Koordinaten-Nullpunkt eines Koordinatensystems. Von diesem Nullpunkt hat bei nicht korrekter Strahllage der Strahl der zu korrigierenden Ist-Lage eine Abweichung in X- und Y-Richtung um einen jeweils von der Prüfvorrichtung festzustellenden Betrag. Diese beiden Beträge werden jeweils vorzugsweise über einen Rechner entweder an ein Anzeigegerät für X- und Y-Abweichung oder aber vorteilhafterweise gleich an entsprechende Stellmotoren für X- und Y-Korrekturbewegung gegeben. Sofern die Werte lediglich angezeigt werden, kann man sie ablesen und von Hand verstellbare, bei Kippvorrichtungen für den Spiegel dementsprechend betätigen. Die Abweichung der Ist-Lage von der Soll-Lage des Strahls ist beispielsweise in X-Richtung in Fig. 1, wie gesagt, in stark übertriebenem Masse durch den Betrag 23 symbolisiert.

Die Fig. 2 und 3 zeigen zwei verschiedene Möglichkeiten der Zuordnung zweier Prüfvorrichtungen 12 und 13 zu zwei Umlenkspiegeln 4 und 24. Wenn der Strahlteil 25 in Fig. 2 von der Soll-Lage abweicht, so bewirkt bei automatischer Verstellung des Umlenkspiegels 4 die Prüfvorrichtung 12 dessen Einstellung im Sinne der Doppelpfeile 26 und 27. Sinngemäss veranlasst die Prüfvorrichtung 13 eine Verstellung des Umlenkspiegels 24 im Sinne der Doppelpfeile 28 und 29, wobei selbstverständlich jeweils nur eine Drehbewegung in einer Richtung des Doppelpfeils erforderlich ist. Letzterer soll lediglich die möglichen Dreh- bzw. Kippbewegungen in gegenläufigem Sinne andeuten. Mit der Prüfvorrichtung 33 wird der Strahlteil 30 überwacht bzw. dessen Strahllage ermittelt.

Wenn nun die Prüfvorrichtung 13 eine Verstellung des Spiegels 24 veranlasst, weil die Ist-Lage des Strahlteils 30 von der Soll-Lage abweicht, so hat diese Spiegelverstellung selbstverständlich Auswirkungen auf den Verlauf des Strahlteils 25. Aus diesem Grunde müssen also alle Abweichungen zunächst einmal erfasst und in einem Rechner verarbeitet werden. Dieser berücksichtigt dann die notwendigen Verstellbewegungen der beiden Spiegel 4 und 24 unter Berücksichtigung der Rückwirkung der Spiegelverstellung 24 auf den Strahlteil 25, so dass die Strahlteile 25 und 30 am Ende der Ausrichtbewegungen beider Spiegel eine korrekte Lage einnehmen.

Wie Fig. 3 zeigt, ist es durchaus möglich, zwei im Abstand voneinander angeordnete, hintereinanderliegende Prüfvorrichtungen 12 und 13 zwischen dem Umlenkspiegel 4 und der Fokussiereinrichtung 7 anzuordnen, wobei die Prüfvorrichtung 12 den Umlenkspiegel 4 und die Prüfvorrichtung 13 den Umlenkspiegel 24 steuert. Entsprechendes gilt selbstverständlich bei einer Anzeige und nachfolgender Handverstellung. Die Ausführungsform gemäss Fig. 3 ermöglicht eine etwas kompaktere Bauform und dies gilt insbesondere, wenn man den Umlenkspiegel 4, die beiden Prüfvorrichtungen 12 und 13 sowie die Fokussiereinrichtung 7 mit der Düse 8 in einem gemeinsamen Laserkopf 9 unterbringt.

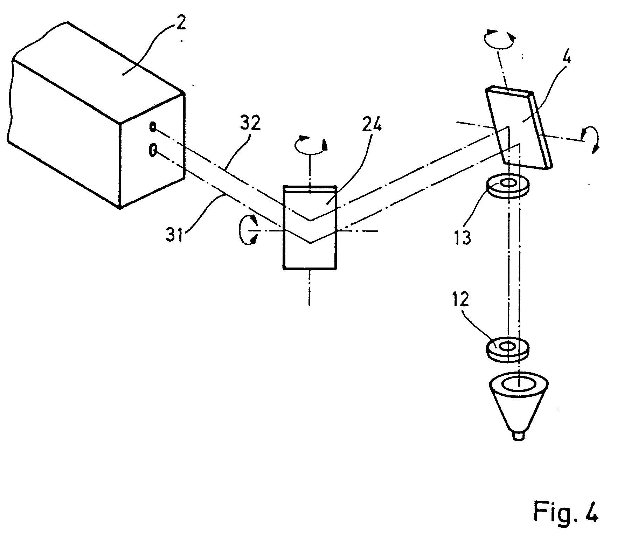

Fig. 4 zeigt ein als Doppelgerät ausgebildetes Lasergerät 2. Aus diesem treten in absoluter Parallellage ein Hauptstrahl 31 sowie ein Hilfsstrahl 32 aus. Vorzugsweise ist der Hilfsstrahl 32 wesentlich schwächer als der Hauptstrahl 31 und ausserdem im Gegensatz zum Hauptstrahl ein sichtbarer Laserstrahl. Bei dieser Variante sind die beiden Prüfvorrichtungen 12 und 13 dem Hilfsstrahl zugeordnet, wobei ihre Anordnung entsprechend dem Schema nach Fig. 2 oder nach Fig. 3 sein kann. Aufgrund der geringeren Intensität ist die Belastung der Prüfvorrichtungen geringer als bei einer Überprüfung des Hauptstrahls. Andererseits bewirkt eine Ausrichtung der beiden Spiegel 4 und 24 aufgrund einer Überprüfung der Lage des Hilfsstrahls automatisch auch eine korrekte Lage des Hauptstrahls, weil beide, wie gesagt, das Lasergerät 2 parallel verlassen. Im übrigen ist es unerheblich, ob im Lasergerät 2 zwei getrennte Laserstrahlen erzeugt werden, oder ob man mittels einer geeigneten Einrichtung vom Hauptstrahl einen Teil abzweigt und als parallelen Hilfsstrahl austreten lässt. In diesem Falle sind allerdings der Haupt- und der Hilfsstrahl entweder beide sichtbar oder beide nicht sichtbar.

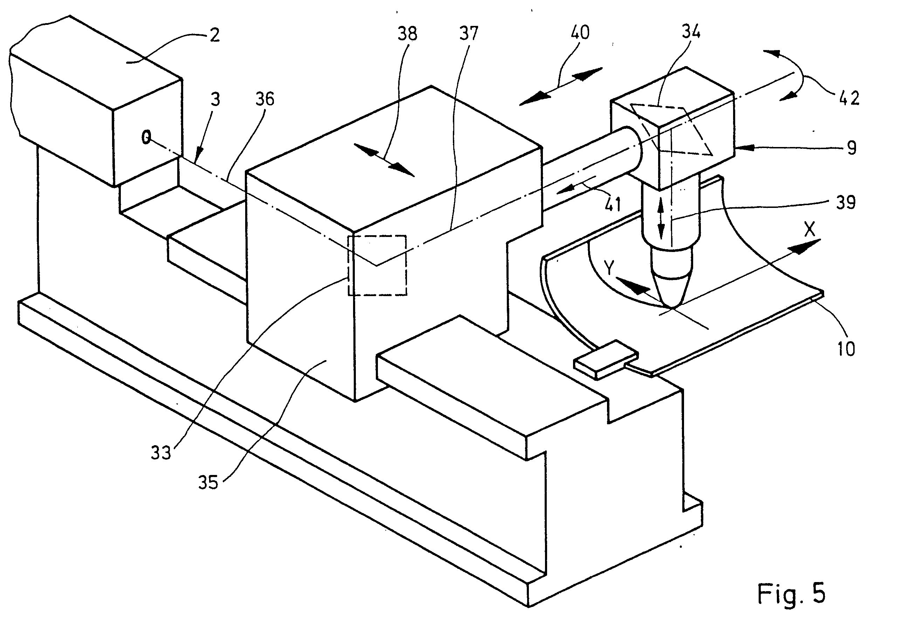

Fig. 5 zeigt eine weitere besondere Ausgestaltung der erfindungsgemässen Maschine. Aus dem Lasergerät 2 tritt ein Laserstrahl 3 oder im Sinne der vorstehenden Ausführungen ein Haupt- und ein Hilfsstrahl aus. Der Einfachheit halber wird nachstehend eine Ausführungsform mit lediglich einem einzigen Laserstrahl 3 beschrieben.

Der unmittelbar aus dem Lasergerät 2 austretende Laserstrahl 3 trifft auf einen ersten Umlenkspiegel 33 einer Haltevorrichtung 35 für den Laserkopf 9. Der zwischen dem Lasergerät 2 und diesem Spiegel 33 gelegene Strahlteil ist mit 36 bezeichnet. Etwa am gegenüberliegenden Ende der Haltevorrichtung 35 befindet sich ein zweiter Umlenkspiegel 34 für den vom ersten Umlenkspiegel 33 reflektierten Strahlteil 37. An beiden Spiegeln erfolgt eine Umlenkung des Laserstrahls um jeweils 90°, und zwar einmal in einer horizontalen und zum anderen in einer vertikalen Ebene. Es ist leicht einzusehen, dass eine Verschiebung der Haltevorrichtung 35 im Sinne des Doppelpfeils 38, also in Längsrichtung des Strahlteils 36, eine Verschiebung des Strahlteils 39 zwischen dem letzten Umlenkspiegel 34 und dem Werkstück 10 parallel zu sich selbst bewirkt, so dass der Laserstrahl einen Schlitz in dieses Werkstück brennt, der parallel zum Strahlteil 36 verläuft.

An der Haltevorrichtung 35 ist der Laserkopf 9 in Richtung des Doppelpfeils 40 verschiebbar gelagert. Diese Richtung verläuft parallel zum Strahlteil 37. Demnach erreicht man also bei stillstehender Haltevorrichtung 35 und einer Verschiebung des Laserkopfs 9 an der Haltevorrichtung 35 in Pfeilrichtung 41 oder in Gegenrichtung eine Verschiebung des Strahlteils 39 parallel zu sich selbst im Sinne des Doppelpfeils 40. Sinngemäss zur Verschiebung der Haltevorrichtung 35 im Sinne des Doppelpfeils 38 erreicht man durch diese Verschiebung des Laserkopfs entlang der Längsachse der Haltevorrichtung 35 eine Verschiebung des Strahlteils 39 im Sinne des Doppelpfeils 40, so dass sich in dieser Richtung ein Längsschlitz in das Werkstück 10 brennen lässt. Nachdem die Doppelpfeile 38 und 40 senkrecht zueinander verlaufen, kann man mit Hilfe dieser Verschieblichkeit von Haltevorrichtung 35 und Laserkopf 9 den Strahlteil 39 parallel zu sich selbst in X- und Y-Richtung verschieben und dadurch jede beliebige Kontur aus dem Werkstück 10 ausbrennen.

Wenn man darüber hinaus den Laserkopf 9 noch um eine zum Strahlteil 37 parallele oder damit zusammenfallende Achse im Sinne des Doppelpfeils 42 schwenkbar an der Haltevorrichtung 35 lagert, wobei die Schwenkebene durch die Y-Achse verläuft und senkrecht zur Ebene des Werkstücks 10 steht, so kann man anstelle ebener Werkstücke oder Bleche 10 auch Werkstücke bearbeiten, die in dieser Schwenkrichtung gebogen oder gewölbt sind. Dies bedeutet, dass man mit dieser Maschine dreidimensional geformte Werkstücke per Laserstrahl bearbeiten kann, die ortsfest am Maschinentisch od. dgl. montiert sind. Die Umlenkspiegel 33 und 34 entsprechen dem Prinzip nach den Spiegeln 24 und 4 der Fig. 2 und 3, so dass also der Laserstrahl dieser Maschine in der vorbeschriebenen Weise durch wenigstens eine oder zwei Prüfvorrichtungen auf korrekte Lage überprüft werden kann bzw. die notwendigen Korrekturen der Spiegelstellungen durchgeführt werden können. Gerade bei bewegtem Laserkopf ist es von besonderem Vorteil, wenn man die Strahlüberwachung ständig oder zu vorbestimmter Zeit, beispielsweise periodisch, überprüft und, sofern notwendig, korrigiert.

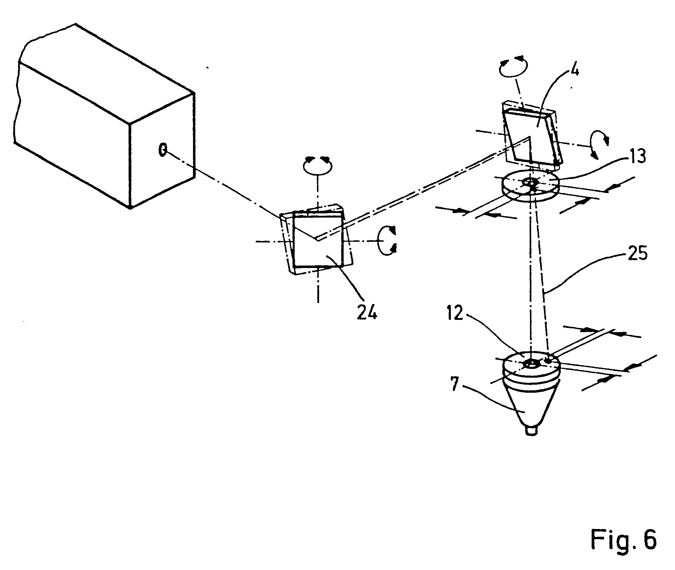

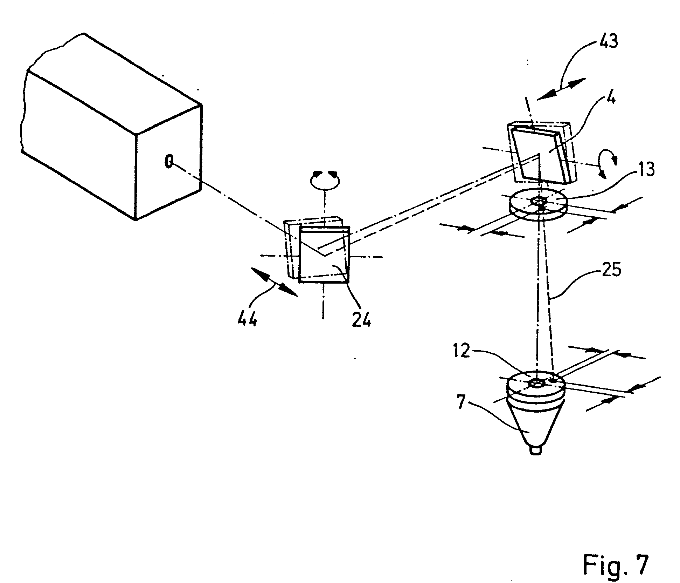

Die Fig. 6 und 7 zeigen, wie durch die Veränderung der Spiegel 4 bzw. 24 der Strahlteil 25 in die Soll-Lage gebracht wird. Bei Fig. 6 erfolgt dies durch je zwei Kippungen um zueinander senkrechte Achsen an beiden Spiegeln 4 und 24, bei Fig. 7 durch zwei Kippungen und durch die Verschiebung des Spiegels 4 längs des Doppelpfeils 43 und des Spiegels 24 längs des Doppelpfeils 44.

**Patentansprüche**

1. Maschine zum Bearbeiten eines Werkstücks (10) mittels eines durch eine gegenüber einem Werkstück bewegbare Düse (8) austretenden Laserstrahls (3, 31), der an mindestens einem Umlenkspiegel (4, 24; 33, 35) umgelenkt wird, wobei der bzw. einer der Umlenkspiegel automatisch einstellbar ist, indem wenigstens eine Prüfvorrichtung (12) die Abweichung der Ist-Lage von der Soll-Lage des Laserstrahls ermittelt und ein der Abweichung entsprechendes Steuersignal über einen Rechner (14) zumindest an eine Verstelleinrichtung (21) für den einstellbaren Spiegel (4, 34) sendet, dadurch gekennzeichnet, dass der verstellbare Umlenkspiegel (4, 34) mit der Düse (8) mechanisch gekoppelt ist, so dass sie zusammen bewegbar sind und dass die Prüfvorrichtung (12) des verstellbaren Umlenkspiegels (4, 34) zwischen der Düse (8) und dem in Laufrichtung des Laserstrahls (3) letzten Umlenkspiegel (4, 34) befindlichen letzten Strahlteil (25, 39) angeordnet ist, und sich die Prüfvorrichtung (12) vorzugsweise nahe der Düse (8) bzw. der Fokussiereinrichtung (7) der Düse (8) befindet.

2. Maschine nach Anspruch 1 mit wenigstens zwei Umlenkspiegeln (24, 33; 4, 34) und mindestens zwei Prüfvorrichtungen (12, 13) für den Strahlverlauf, dadurch gekennzeichnet, dass die Prüfvorrichtung (13) für den in Laufrichtung des Laserstrahls (3) vorletzten Spiegel (24, 33) dem letzten Umlenkspiegel (4, 34) zugeordnet ist, insbesondere beide Prüfvorrichtungen (12, 13) dem letzten Strahlteil (25, 39) zugeordnet sind.

3. Maschine nach Anspruch 2 mit zweifacher Spiegeleinstellung, dadurch gekennzeichnet, dass die einstellbaren Spiegel (24, 33; 4, 34) in zwei zueinander senkrechten Richtungen drehbar oder in einer Richtung drehbar sowie in Richtung des ankommenden Strahlteils verschiebbar sind, wobei im letzteren Falle die Drehachse senkrecht zur Ebene des umgelenkten Strahls verläuft.

4. Maschine nach wenigstens einem der vorhergehenden Ansprüche, dadurch gekennzeichnet, dass der Laserkopf (9) mit der Düse (8), der Fokussiereinrichtung (7), mindestens der Prüfvorrichtung (12) für den letzten Umlenkspiegel (4, 34) sowie mit letzterem um eine Achse drehbar ist, die durch den zwischen den beiden verstellbaren Umlenkspiegeln (4, 34; 24, 33) verlaufenden vorletzten Strahlteil (30, 37) bestimmt ist.

5. Maschine nach Anspruch 4, dadurch gekennzeichnet, dass der Laserkopf (9) in Längsrichtung seiner Drehache (X-Richtung) verschiebbar an einer Haltevorrichtung (35) gelagert ist und die Haltevorrichtung senkrecht zur Drehachse, d. h. in Y-Richtung verschiebbar an der Maschine gelagert ist, wobei sich der vorletzte Umlenkspiegel (33) in der Haltevorrichtung befindet.

6. Maschine nach wenigstens einem der vorhergehenden Ansprüche, dadurch gekennzeichnet, dass der Laserstrahl (3) mittels einer Trennvorrichtung in einen Hauptstrahl (31) und einen dazu parallelen Hilfsstrahl (32) unterteilbar ist, wobei die Prüfvorrichtungen (12, 13) lediglich dem Hilfsstrahl (32) zugeordnet sind.

7. Maschine nach wenigstens einem der Ansprüche 1 bis 5, dadurch gekennzeichnet, dass das Lasergerät als Doppelgerät ausgebildet ist, dessen beide Laserstrahlen parallel verlaufen und einen Hauptstrahl (31) sowie einen schwächeren Hilfsstrahl (32) bilden, wobei die Prüfvorrichtungen (12, 13) lediglich dem Hilfsstrahl (32) zugeordnet sind.

8. Maschine nach Anspruch 6 oder 7, dadurch gekennzeichnet, dass der Hauptstrahl (31) ein Strahl hoher Intensität, insbesondere im Infrarotbereich, und der Hilfsstrahl (32) ein Strahl geringer Intensität vorzugsweise im sichtbaren Bereich ist.

**Claims**

1. Machine for processing a workpiece (10) by means of a laser beam (3, 31) emanating from a nozzle (8) which can be moved in relation to a workpiece, the beam being deflected at at least one deviation mirror (4, 24; 33, 35), whereby the deviation mirror or one of the deviation mirrors can be automatically adjusted, in that at least one testing device (12) determines the deviation of the actual position from the desired position of the laser beam and transmits a control signal corresponding to the deviation via a computer (14) at least to one adjusting device (21) for the adjustable mirror (4, 34) characterised in that the adjustable deviation mirror (4, 34) is mechanically coupled to the nozzle (8) so that they can be moved together and that the testing device (12) of the adjustable deviation mirror (4, 34) is arranged between the nozzle (8) and the last portion of the beam (25, 39) in the last deviation mirror (4, 34) in the direction of movement of the laser beam (3) and the testing device (12) is located for preference in the vicinity of the nozzle (8) or the focusing device (7) of the nozzle.

2. Machine according to claim 1 with at least two deviation mirrors (24, 33; 4, 34) and at least two testing devices (12, 13) for the path of the beam, characterised in that the testing device (13) is assigned to the final deviation mirror (4, 34) for the penultimate mirror (24, 33) in the direction of movement of the laser beam (3) and in particular both testing devices (12, 13) are assigned to the final portion of the beam (25, 39).

3. Machine according to claim 2 with a dual mirror setting, characterised in that the adjustable mirrors (24, 33; 4, 34) can be rotated in two directions which are perpendicular to each other or can be rotated in one direction as well as displaced in the direction of the oncoming portion of the beam, whereby in the latter case the axis of rotation is perpendicular to the plane of the deflected beam.

4. Machine according to at least one of the previous claims, characterised in that the laser head (9) with the nozzle (8) the focusing device (7), at least the testing device (12) for the final deviation mirror (4, 34) as well as with the latter can be rotated about an axis, which is determined by the penultimate portion of the beam (30, 37) running between the two adjustable deviation mirrors (4, 34; 24, 33).

5. Machine according to claim 4, characterised in that the laser head (9) is mounted at a holding device (35) so that it can be displaced in the longitudinal direction of its axis of rotation (X direction) and the holding device is mounted on the machine so that it is perpendicular to the axis of rotation, i.e. so that it can be displaced in the Y direction, whereby the penultimate deviation mirror (33) is located in the holding device.

6. Machine according to at least one of the previous claims, characterised in that the laser beam (3) can be divided into a main beam (31) and an auxiliary beam (32) which is parallel to it by means of a separating device, whereby the testing devices (12, 13) are assigned solely to the auxiliary beam (32).

7. Machine according to at least one of the claims 1 to 5, characterised in that the laser system is constructed as a double system, both laser beams of which run in parallel and form a main beam (31) as well as a weaker auxiliary beam (32), whereby the testing devices (12, 13) are assigned solely to the auxiliary beam (32).

8. Machine according to claim 6 or 7, characterised in that the main beam (31) is a beam of high intensity, in particular in the infrared range and the auxiliary beam (32) is a beam of low intensity for preference in the visual range.

**Revendications**

1. Machine pour façonner une pièce à usiner (10), au moyen d'un rayonnement laser (3, 31) qui sort par une buse (8) mobile par rapport à une pièce à usiner, et est réfléchi sur au moins un miroir réflecteur (4, 24; 33, 35), le ou, respectivement, l'un des miroirs réflecteurs étant réglable automatiquement du fait qu'au moins un dispositif de contrôle (12) détermine l'écart de la position réelle du rayonnement laser par rapport à sa position de consigne et délivre un signal de commande correspondant à cet écart, par l'intermédiaire d'un calculateur (14), au moins à un dispositif (21) d'ajustement du miroir réglable (4, 34), caractérisée par le fait que le miroir réflecteur réglable (4, 24, 34) est couplé mécaniquement avec la buse (8), de telle sorte qu'ils soient mobiles conjointement; et par le fait que le dispositif (12) de contrôle du miroir réflecteur réglable (4, 34) est intercalé entre la buse (8) et le dernier miroir réflecteur (4, 34) dans le sens de circulation du rayonnement laser (3), sur la dernière partie du rayonnement (25, 39), le dispositif de contrôle (12) se trouvant, de préférence, à proximité de la buse (8) ou, respectivement, du dispositif de focalisation (7) de cette buse (8).

2. Machine selon la revendication 1, comprenant au moins deux miroirs réflecteurs (24, 33; 4, 34) et au moins deux dispositifs (12, 13) de contrôle de l'allure du rayonnement, caractérisée par le fait que le dispositif (13) de contrôle de l'avant-dernier miroir (24, 33) dans le sens de circulation du rayonnement laser (3) est associé au dernier miroir réflecteur (4, 34), les deux dispositifs de contrôle (12, 13) étant notamment associés à la dernière partie du rayonnement (25, 39).

3. Machine selon la revendication 2, avec réglage double des miroirs, caractérisée par le fait que les miroirs réglables (24, 33; 4, 34) peuvent tourner dans deux directions mutuellement perpendiculaires, ou bien peuvent tourner dans une direction et également coulisser en direction de la partie du rayonnement incidente, l'axe de rotation s'étendant, dans ce dernier cas, perpendiculairement au plan du rayonnement réfléchi.

4. Machine selon au moins l'une des revendications précédentes, caractérisée par le fait que la tête laser (9) peut tourner avec la buse (8), avec le dispositif de focalisation (7), au moins avec le dispositif (12) de contrôle du dernier miroir réflecteur (4, 34) ainsi qu'avec ce dernier, autour d'un axe qui est déterminé par l'avant-dernière partie du rayonnement (30, 37) s'étendant entre les deux miroirs réflecteurs réglables (4, 34; 24, 33).

5. Machine selon la revendication 4, caractérisée par le fait que la tête laser (9) est montée coulissante sur un dispositif de retenue (35) dans le sens longitudinal de son axe de rotation (direction X), et le dispositif de retenue est monté coulissant sur la machine perpendiculairement à l'axe de rotation, c'est-à-dire dans la direction Y, l'avant-dernier miroir réflecteur (33) se trouvant dans le dispositif de retenue.

6. Machine selon au moins l'une des revendications précédentes, caractérisée par le fait que le rayonnement laser (3) peut être scindé, au moyen d'un dispositif de séparation, en un rayonnement principal (31) et en un rayonnement auxiliaire (32) parallèle à ce dernier, les dispositifs de contrôle (12, 13) étant associés seulement au rayonnement auxiliaire (32).

7. Machine selon au moins l'une des revendications 1 à 5, caractérisée par le fait que l'appareil laser est réalisé en tant qu'appareil double, dont les deux rayonnements laser s'étendent parallèlement et forment un rayonnement principal (31) ainsi qu'un rayonnement auxiliaire plus faible (32), les dispositifs de contrôle (12, 13) étant associés seulement au rayonnement auxiliaire (32).

8. Machine selon la revendication 6 ou 7, caractérisée par le fait que le rayonnement principal (31) est un rayonnement de grande intensité, en particulier dans la zone infrarouge, et le rayonnement auxiliaire (32) est un rayonnement d'intensité faible, de préférence dans la zone visible.

Fig. 1

Fig. 2

Fig. 3

Fig. 4

42
9
39
10
X
34
Y
41
40
37
38
36
2
3
35
33

Fig. 5

Fig. 6

Fig. 7